# EUROPÄISCHE PATENTSCHRIFT

(11) **EP 2 201 747 B1**
(45) Veröffentlichungstag und Bekanntmachung des Hinweises auf die Patenterteilung: **06.04.2011**
(21) Anmeldenummer: 08803258.6
(22) Anmeldetag: 27.08.2008
(51) Int. Cl.: H04L 29/08

(54) **VERFAHREN ZUM BETRIEB EINES DEZENTRALEN KOMMUNIKATIONSNETZES**
DEVICE FOR OPERATING A DEZENTRALIZED COMMUNICATION NETWORK
PROCÉDÉ D'EXPLOITATION D'UN RÉSEAU DE COMMUNICATION DÉCENTRALISÉ

(30) Priorität: 13.09.2007 DE 102007043652
(43) Veröffentlichungstag der Anmeldung: 30.06.2010
(73) Patentinhaber: Siemens Aktiengesellschaft, 80333 München (DE)
(72) Erfinder: GERDES, Christoph, 81667 München (DE); KLEEGREWE, Christian, 85386 Eching (DE); SOUTHALL, Alan, 69190 Walldorf (DE); RUSITSCHKA, Sebnem, 81543 Muenchen (DE); KERN, Claus, 90518 Altdorf (DE)
(86) Internationale Anmeldenummer: PCT/EP2008/061191
(87) Internationale Veröffentlichungsnummer: WO 2009/037074

(56) Entgegenhaltungen:
- DE-B3-102006 021 591
- US-A1- 2004 249 970
- US-A1- 2005 117 525

## Beschreibung

Die Erfindung betrifft ein Verfahren zum Betrieb eines dezentralen Kommunikationsnetzes mit einer Vielzahl von Netzknoten sowie ein entsprechendes Kommunikationsnetz.

Dezentrale Kommunikationsnetze werden z.B. als Peer-to-Peer-Netze zum Austausch von Daten eingesetzt, wobei eine Vielzahl von Netzknoten sich dezentral ohne Zwischenschaltung eines Servers selbst verwalten. Zum Betrieb von solchen dezentralen Netzen werden entsprechende Protokolle verwendet, mit denen eine logische Struktur von Netzknoten geschaffen wird. Bekannte Peer-to-Peer-Protokolle, wie z.B. Gnutella, dienen zur Kommunikation von Benutzerendgeräten, insbesondere von PCs oder Mobilfunkgeräten, über das Internet, um Daten zu publizieren und zu suchen.

Es ist wünschenswert, dezentrale Datennetze auch im Bereich von industriellen technischen Systemen zu verwenden. Heutzutage werden technische Systeme häufig als sog. "Embedded Systems" realisiert, bei denen die einzelnen Komponenten des Systems Intelligenz in der Form eines Rechners sowie eines Kommunikationsmoduls zum Kommunizieren mit anderen Komponenten des technischen Systems aufweisen. Für diese Systeme eignet sich der Einsatz von entsprechenden dezentralen Datennetzen, da jede Komponente des Systems selbständig mit anderen Komponenten kommunizieren kann. Die Verwendung von herkömmlichen Peer-to-Peer-Protokollen im industriellen Anwendungsbereich weist jedoch den Nachteil auf, dass die bei herkömmlichen Protokollen verwendeten Mechanismen zur Veröffentlichung und Suche nach Ressourcen oftmals nicht industrielle Anforderungen in Bezug auf die Kommunikationsgeschwindigkeit zwischen den Geräten erfüllen.

Das Dokument US 2005/0117525 A1 beschreibt ein Verfahren zum Betrieb eines dezentralen Datennetzes, wobei jeder Netzknoten eine Tabelle verwaltet, in der Informationen zu anderen Netzknoten hinterlegt sind. Den Netzknoten sind dabei entsprechende Identitäten in der Form von Verzeichnisnummern zugewiesen. Ferner senden die Netzknoten periodisch Aktivitäts-Nachrichten aus, solange sie mit dem Netzwerk verbunden sind. Ein Netzknoten mit zugewiesener Verzeichnisnummer stellt dabei die Inaktivität eines anderen Netzknotens fest, wenn er von dem anderen Netzknoten über einen vorbestimmten Zeitraum keine Aktivitäts-Nachricht empfängt.

In der Druckschrift DE 10 2006 021 591 B3 ist ein Verfahren zur Datenübertragung zwischen Peer-to-Peer-Netzen offenbart, welches die netzwerkübergreifende Verarbeitung von Suchanfragen in verschiedenen Peer-to-Peer-Netzen ermöglicht.

Aufgabe der Erfindung ist es, ein Verfahren zum Betrieb eines dezentralen Kommunikationsnetzes zu schaffen, mit dem eine schnelle und verlässliche Kommunikation der einzelnen Netzknoten untereinander gewährleistet ist.

Diese Aufgabe wird durch die unabhängigen Patentansprüche gelöst. Weiterbildungen der Erfindung sind in den abhängigen Ansprüchen definiert.

Mit dem erfindungsgemäßen Verfahren wird ein Kommunikationsnetz mit einer Vielzahl von Netzknoten betrieben, wobei jedem Netzknoten ein Identitätswert aus einem Wertebereich von Identitätswerten sowie eine Adresse zur Kommunikation des jeweiligen Netzknotens mit anderen Netzknoten zugewiesen ist und wobei jeder Netzknoten für ein Intervall von Identitätswerten aus dem Wertebereich zuständig ist.

In dem erfindungsgemäßen Verfahren verwaltet jeder betriebsbereite Netzknoten eine Tabelle, welche für zumindest die betriebsbereiten Netzknoten im Kommunikationsnetz jeweils einen Eintrag enthält, der zumindest den Identitätswert und die Adresse des jeweiligen Netzknotens umfasst. Die Tabelle stellt in einer bevorzugten Variante eine Hash-Tabelle mit entsprechenden Hash-Werten aus einem Hash-Wertebereich dar. Die Adresse der einzelnen Netzknoten in der Tabelle ist vorzugsweise eine Netzwerkadresse, wie z.B. eine IP-Adresse oder eine MAC-Adresse.

In dem erfindungsgemäßen Verfahren sendet jeder betriebsbereite Netzknoten regelmäßig Aktivitäts-Nachrichten an die anderen Netzknoten des Kommunikationsnetzes, wobei die Aktivitäts-Nachrichten jeweils zumindest den Identitätswert und die Adresse des jeweiligen Netzknotens beinhalten und jeder betriebsbereite Netzknoten bei Empfang einer Aktivitäts-Nachricht seine Tabelle mit dem Inhalt der Aktivitäts-Nachricht synchronisiert. Unter Synchronisation ist insbesondere zu verstehen, dass der entsprechende Eintrag in der Tabelle zumindest dann aktualisiert wird, wenn der Inhalt der Aktivitäts-Nachricht von dem aktuellen Inhalt in dem Eintrag abweicht. Ebenso ist unter Synchronisation die Erzeugung eines neuen Eintrags bzw. die Erstbelegung eines Eintrags gemäß dem Inhalt der entsprechenden Aktivitäts-Nachricht zu verstehen.

In dem Kommunikationsnetz ist ferner vorzugsweise ein Mechanismus vorgesehen, durch den festgestellt wird, wenn ein betriebsbereiter Netzknoten inaktiv wird, wobei ein inaktiver Netzknoten sich dadurch auszeichnet, dass er keine Aktivitäts-Nachricht mehr aussendet. Ein inaktiver Netzknoten kann somit ein ausgefallener Netzknoten sein oder ein Netzknoten, der sich abgeschaltet hat bzw. heruntergefahren wurde. Der Mechanismus zur Feststellung, dass ein jeweiliger Netzknoten inaktiv wird, läuft insbesondere derart ab, dass über zumindest einen, dem jeweiligen Netzknoten zugeordneten Überwachungsknoten überwacht wird, ob der jeweilige Netzknoten Aktivitäts-Nachrichten aussendet, wobei der zumindest eine Überwachungsknoten auch einer der Netzknoten des Kommunikationsnetzes ist. Im Falle, dass der überwachte Netzknoten keine Aktivitäts-Nachricht mehr aussendet, sendet der zumindest eine Überwachungsknoten eine Deaktivierungs-Nachricht an alle anderen Netzknoten, wobei die Deaktivierungs-Nachricht zumindest den Identitätswert des jeweiligen (überwachten) Netzknotens enthält. Die Deaktivierungs-Nachricht dient dabei dazu, dass ein Netzknoten bei Empfang dieser Nachricht seine Tabelle entsprechend aktualisiert.

Das erfindungsgemäße Verfahren zeichnet sich dadurch aus, dass durch das Aussenden von Aktivitäts-Nachrichten jede Tabelle der einzelnen Netzknoten Informationen zu allen anderen Netzknoten enthält, so dass jeder Netzknoten mit Hilfe des Identitätswerts und der entsprechenden Adresse in der Tabelle andere Netzknoten unmittelbar ansprechen kann. Somit sind in dem dezentralen Kommunikationsnetz jedem Netzknoten alle anderen Netzknoten bekannt, was bei herkömmlichen dezentralen Datennetzen nicht der Fall ist. Auf diese Weise wird die Suche nach Ressourcen vereinfacht, da ein entsprechender Netzknoten direkt angesprochen werden kann und nicht durch aufwändige Lookup-Verfahren nach Netzknoten gesucht werden muss. Das Verfahren eignet sich insbesondere zur Verwendung in industriellen Anwendungen, bei denen die Anzahl an Netzknoten im Vergleich zu Anwendungen im Internet überschaubar ist, so dass die Verwaltung von Tabellen mit Informationen zu allen Netzknoten des dezentralen Datennetzes problemlos möglich ist. Ebenso werden industrielle Anforderungen an die Kommunikationsgeschwindigkeit erfüllt, da jeder Netzknoten Informationen über alle anderen Netzknoten enthält und somit wesentlich schneller nach Ressourcen und entsprechenden Netzknoten gesucht werden kann.

Wie bereits oben dargelegt, eignet sich das erfindungsgemäße Verfahren insbesondere zur Verwendung in einem Kommunikationsnetz eines technischen Systems, welches eine Mehrzahl von technischen Komponenten aufweist. In einem solchen technischen System sind zumindest einem Teil der technischen Komponenten jeweils eine Geräteidentität zum Zugriff auf die technische Komponente zugewiesen und einer Geräteidentität ist zumindest ein Netzknoten des Kommunikationsnetzes zugeordnet. Mit Hilfe der Geräteidentität kann ein Gerät in dem Kommunikationsnetz direkt ohne die Adressierung über die Adressen der Netzknoten angesprochen werden. Eine direkte Kommunikation über die Geräteidentitäten ist oftmals ein Erfordernis in industriellen Anwendungen, um schnell, beispielsweise in Notfallsituationen, Befehle an die entsprechenden Geräte übertragen zu können. Um erfindungsgemäß auch die Kommunikation mittels der Geräteidentitäten zu gewährleisten, umfasst ein Eintrag der Tabelle der jeweiligen Netzknoten vorzugsweise ferner jeweils die Geräteidentität, welcher der dem Eintrag entsprechende Netzknoten zugeordnet ist. Dabei wird mit einer jeweiligen Aktivitäts-Nachricht ferner die Geräteidentität übermittelt, welche dem Netzknoten zugeordnet ist, der die jeweilige Aktivitäts-Nachricht aussendet. Auf diese Weise wird in dem erfindungsgemäßen Verfahren auch die Kommunikation über die Geräteidentitäten ermöglicht, wobei mit Hilfe der Aktivitäts-Nachrichten die Geräteidentitäten in den Tabellen auf dem aktuellen Stand gehalten werden. Es wird somit eine Tabelle mit zwei Arten von Schlüsseln geschaffen, mit denen in dem Datennetz nach Ressourcen gesucht werden kann bzw. Geräte angesprochen werden können.

Das erfindungsgemäße Verfahren kann in beliebigen industriellen Anwendungsbereichen eingesetzt werden. Beispielsweise kann das Verfahren in Spannungsverteilsystemen, insbesondere in einem Umspannwerk, verwendet werden, wobei die technischen Komponenten insbesondere Schalteinheiten in dem Spannungsvereilsystem umfassen. Ein anderer Anwendungsbereich ist ein Energieerzeugungssystem, insbesondere eine Turbine. Ebenso kann das Verfahren in Automatisierungsanlagen, insbesondere in einer Fertigungsstraße, verwendet werden.

Um auf einfache Weise zu gewährleisten, dass die Aktivitäts-Nachrichten alle Netzknoten im Kommunikationsnetz erreichen, werden diese Nachrichten vorzugsweise als Broadcast-Nachrichten von dem jeweiligen Netzknoten in das Kommunikationsnetz ausgesendet.

Analog zu den Aktivitäts-Nachrichten wird die Deaktivierungs-Nachricht vorzugsweise auch als Broadcast-Nachricht von dem zumindest einen Überwachungsknoten in das Kommunikationsnetz ausgesendet. Der zumindest eine Überwachungsknoten ist vorzugsweise ein Netzknoten, der in der Reihenfolge der Identitätswerte zum überwachten Netzknoten benachbart ist, wobei vorzugsweise die beiden unmittelbaren Nachbarn mit kleinerem bzw. größerem Identitätswert als der überwachte Netzknoten als Überwachungsknoten fungieren.

In einer weiteren Ausgestaltung des erfindungsgemäßen Verfahrens ermittelt der zumindest einen Überwachungsknoten ferner, ob neue Netzknoten in dem Kommunikationsnetz aktiv werden. Dabei überprüft der Überwachungsknoten im Falle, dass er eine Aktivitäts-Nachricht von einem neu in das Kommunikationsnetz hinzukommenden oder aktivierten Netzknoten empfängt, ob der neue Netzknoten ein neuer benachbarter Netzknoten ist, wobei der Überwachungsknoten im Falle, dass der neue Netzknoten ein neuer Nachbar ist, die Überwachung dieses Netzknotens beginnt. Die Überwachung des alten benachbarten Knotens wird in diesem Falle vorzugsweise eingestellt. Auf diese Weise wird sichergestellt, dass die Überwachung immer derart ausgestaltet ist, dass die Überwachungsknoten zumindest die direkten Nachbarn des überwachten Knotens umfassen. Anstatt bzw. neben der Verwendung von Überwachungsknoten kann sich ein Netzknoten auch selbst überwachen. Insbesondere sendet ein solcher, sich selbst überwachender Netzknoten eine seinen Identitätswert enthaltende Deaktivierungs-Nachricht an alle anderen betriebsbereiten Netzknoten, wenn er sich abschaltet.

In einer weiteren, bevorzugten Ausführungsform der Erfindung enthält die Tabelle eines jeweiligen Netzknotens Einträge für alle Identitätswerte des Wertebereichs, wobei für jeden Eintrag über ein Statusfeld angezeigt wird, ob der Netzknoten des Eintrags im Kommunikationsnetz vorhanden ist oder betriebsbereit ist oder inaktiv ist. Im Falle, dass in einem jeweiligen Netzknoten Aktivitäts-Nachrichten von einem Netzknoten empfangen werden, der in dem Kommunikationsnetz zuvor noch nicht vorhanden oder zuvor inaktiv war, wird der entsprechende Eintrag des zuvor noch nicht vorhandenen oder zuvor inaktiven Netzknotens der Tabelle mit dem Inhalt der Aktivitäts-Nachricht synchronisiert, und das Statusfeld des entsprechenden Eintrags wird auf aktiv gesetzt.

In einer weiteren Ausgestaltung des erfindungsgemäßen Verfahrens setzt ein jeweiliger Netzknoten, der eine Deaktivierungs-Nachricht empfängt, das Statusfeld des Eintrags des Netzknotens gemäß dem Identitätswert in der Deaktivierungs-Nachricht auf inaktiv.

In einer weiteren Ausgestaltung des erfindungsgemäßen Verfahrens ist jeder betriebsbereite Netzknoten für das Intervall von Identitätswerten zwischen seinem Identitätswert und dem nächst größeren bzw. nächst kleinerem Identitätswert seines betriebsbereiten Nachbarknotens zuständig. Bei einer Veränderung des Statusfeldes eines Eintrags der Tabelle der betriebsbereiten Netzknoten werden dabei die Intervalle der Identitätswerte, für welche die betriebsbereiten Netzknoten zuständig sind, basierend auf den sich verändernden Identitätswerten angepasst. Auf diese Weise übernimmt ein Netzknoten beim Wegfall eines anderen Netzknotens ein größeres Intervall bzw. ein neu hinzukommender Netzknoten übernimmt zum Teil das Intervall eines bereits vorhandenen Netzknotens.

In einer besonders bevorzugten Ausführungsform des erfindungsgemäßen Verfahrens werden in dem Kommunikationsnetz durch zumindest einen Teil der Netzknoten Ressourcen publiziert, indem ein oder mehrere, einer Ressource zugeordnete Schlüsselwörter auf einen Identitätswert abgebildet werden, wobei die Ressource oder ein Verweis auf die Ressource auf einem Publikationsknoten gespeichert wird, wobei der Publikationsknoten derjenige Netzknoten ist, der für das Intervall zuständig ist, welches den Identitätswert enthält, auf dem das oder die Schlüsselwörter abgebildet sind. Unter Ressource sind hierbei beliebige Daten zu verstehen, die in dem Netz gespeichert und bekannt gemacht werden sollen. Vorzugsweise sind hierbei die Identitätswerte Hash-Werte, wobei die Abbildung des oder der Schlüsselwörter auf den Identitätswert mit einer Hash-Funktion erfolgt. Es kann hierbei eine beliebige Hash-Funktion verwendet werden, vorzugsweise wird die Hash-Funktion derart gewählt, dass eine gleichmäßige Verteilung der Ressourcen auf den Netzknoten erreicht wird. Eine derartige Hash-Funktion ist z.B. die hinlänglich aus dem Stand der Technik bekannte Fowler/Noll/Vo (FNV) Hash-Funktion.

Vorzugsweise werden bei der Publikation einer Ressource Replikationen durchgeführt, so dass die Ressource oder ein Verweis auf die Ressource außer auf dem Publikationsknoten auf weiteren Knoten gespeichert wird. Auf diese Weise wird Redundanz in dem Kommunikationsnetz erzeugt, so dass bei Ausfall eines Netzknotens die dort gespeicherten Ressourcen nicht verloren gehen. In einer besonders bevorzugten Ausführungsform werden die weiteren, zur Replikation verwendeten Netzknoten durch Addition von Primzahlen zu dem Identitätswert des Publikationsknotens bestimmt. Vorzugsweise wird im Falle, dass sich die Zuständigkeit eines Netzknotens für eine Ressource in dem Kommunikationsnetz verändert (beispielsweise beim Hinzukommen oder Wegfallen von Netzknoten), die Ressource in dem Kommunikationsnetz nochmals publiziert.

In dem Kommunikationsnetz kann besonders einfach nach Ressourcen derart gesucht werden, dass ein suchender Netzknoten das oder die Schlüsselwörter der Ressource auf den Identitätswert abbildet und mit Hilfe seiner Tabelle den Netzknoten ermittelt, der für die Ressource zuständig ist. Über die Adresse des ermittelten Netzknotens der Tabelle kann dieser Netzknoten dann durch den suchenden Netzknoten angesprochen werden.

Das erfindungsgemäße Verfahren kann in beliebigen dezentralen Netzen eingesetzt werden, bevorzugter Anwendungsbereich sind hinlänglich bekannte Peer-to-Peer-Netze, insbesondere solche Netze mit einer logischen Ringstruktur, wie z.B. Chord. Das erfindungsgemäße Verfahren stellt vorzugsweise eine Erweiterung des Kommunikationsprotokolls für solche Peer-to-Peer-Netze dar.

Neben dem oben beschriebenen Verfahren umfasst die Erfindung ferner ein dezentrales Kommunikationsnetz, welches derart ausgestaltet ist, dass jede der oben beschriebenen Varianten des erfindungsgemäßen Verfahrens in diesem Netz durchführbar ist.

Ausführungsbeispiele der Erfindung werden nachfolgend anhand der beigefügten Figuren detailliert beschrieben.

Es zeigen:
- Fig. 1: eine Ausführungsform einer in der Erfin- dung verwendeten Hash-Tabelle zu zwei un- terschiedlichen Zeitpunkten in einem Peer-to-Peer-Netz;
- Fig. 2 und Fig. 3: Darstellungen einer Ausführungsform des erfindungsgemäßen Peer-to-Peer-Netzes, anhand derer der Ablauf des erfindungsge- mäßen Verfahrens erläutert wird;
- Fig. 4: ein Diagramm, welches den Ablauf der Überwachung eines Peers durch seine Nach- barn gemäß einer Ausführungsform der Er- findung wiedergibt;
- Fig. 5: eine Darstellung einer Ausführungsform des erfindungsgemäßen Peer-to-Peer- Netzes, anhand welcher die Detektion des Ausfalls eines Peers erläutert wird;
- Fig. 6: eine Darstellung einer Ausführungsform des erfindungsgemäßen Peer-to-Peer- Netzes, anhand welcher das Publizieren und die Suche nach Ressourcen verdeut- licht wird;
- Fig. 7: ein Ablaufdiagramm, welches das Republi- zieren von Ressourcen beim Ausfall eines Peers in einer Ausführungsform des erfin- dungsgemäßen Verfahrens wiedergibt; und
- Fig. 8: ein Ablaufdiagramm, welches das Publizie- ren von Ressourcen auf mehreren Peers ei- ner Replikationsgruppe gemäß einer Aus- führungsform des erfindungsgemäßen Ver- fahrens wiedergibt.

Das nachfolgend beschriebene erfindungsgemäße Verfahren wird in einem Peer-to-Peer-Netz eines technischen Systems eingesetzt, welches ein sog. "Embedded System" darstellt, bei dem die einzelnen Komponenten des Systems neben ihrer eigentlichen technischen Funktion ferner Kommunikationsmittel in der Form eines Kommunikationsmoduls und einer entsprechenden CPU umfassen. Es wird somit Rechenleistung in die Geräte eingebettet, und die einzelnen Geräte können über die Kommunikationsmodule miteinander kommunizieren. In diesem Embedded System wird eine Peer-to-Peer-Struktur der einzelnen Komponenten untereinander geschaffen, so dass eine dezentrale Verwaltung bzw. Steuerung des technischen Systems ermöglicht wird. Ein Anwendungsbereich eines technischen Systems ist hierbei ein Spannungsverteilsystem, bei dem die einzelnen Komponenten unter anderem Hochspannungsschalter umfassen. Auf diesem technischen System wird nunmehr eine Peer-to-Peer-Struktur abgebildet, wobei zu berücksichtigen ist, dass das Protokoll zur Kommunikation der einzelnen Peers untereinander gegenüber herkömmlichen Peer-to-Peer-Protokollen verbessert sein muss, da die Anforderungen hinsichtlich Ausfällen bzw. schneller Kommunikation in industriellen Anwendungsbereichen wesentlich höher sind als bei herkömmlichen Anwendungen von Peer-to-Peer-Netzen im Internet. Um diesem Erfordernis Rechnung zu tragen, wird in der Erfindung ein sog. Double-Key-Hash-Table als Hash-Tabelle verwendet. Diese Hash-Tabelle unterscheidet sich gegenüber herkömmlichen Hash-Tabellen darin, dass die Hash-Tabelle Informationen zu allen Peers im Netz enthält und für jeden Peer zwei Identitäten hinterlegt sind, welche zur Kommunikation zwischen den technischen Komponenten des Systems verwendet werden können.

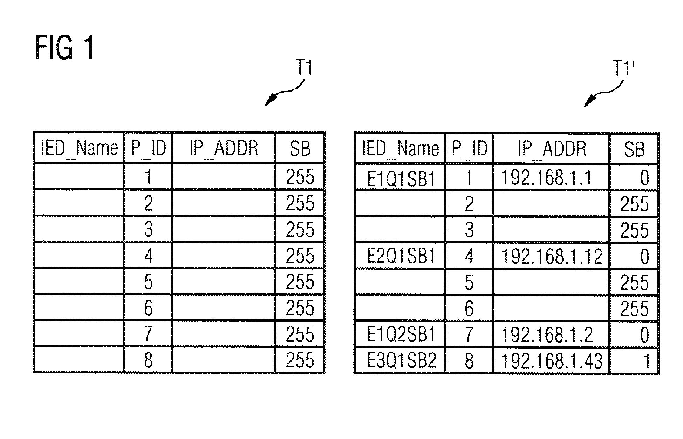

Fig. 1 zeigt einen Ausschnitt aus den gemäß der Erfindung verwendeten Double-Key-Hash-Tabellen in einem Peer-to-Peer-Netz, wobei jeder Peer in dem Netz eine solche Tabelle verwaltet. Die Tabelle T1 zeigt hierbei eine Belegung zum Zeitpunkt, wenn der entsprechende Peer 1, der die Tabelle T1 verwaltet, sich mit dem Netz verbindet. Die Tabelle T1' zeigt den Zustand der Tabelle, wenn der entsprechende Peer 1 Informationen zu allen Peers in dem Netz erhalten hat. In der hier beschriebenen Ausführungsform wird ein Peer-to-Peer-Netz betrachtet, das eine logische Ringstruktur aufweist, wobei insgesamt 128 binäre Hash-Werte als Wertebereich verwendet werden. In Fig. 1 sind die ersten acht Einträge der Hash-Tabelle T1 bzw. T1' wiedergegeben. Die in der hier beschriebenen Ausführungsform verwendeten Hash-Tabellen weisen hierbei Einträge für jeden möglichen Hash-Wert auf, da gegebenenfalls jeder Peer als Identität einen dieser Hash-Werte übernehmen kann.

Die Tabelle gemäß Fig. 1 weist somit insgesamt 128 Zeilen auf, wobei jede Zeile für einen Hash-Wert steht und mit möglichen Peer-Identitäten P_ID (zweite Spalte von links in den Tabellen) von 1 bis 128 durchnummeriert ist.

Die einzelnen Peers in dem Peer-to-Peer-Netz werden neben ihrer Peer-Identität P_ID, die einem Hash-Wert entspricht, auch durch eine entsprechende IP- oder MAC-Adresse IP_ADDR (dritte Spalte von links in den Tabellen) charakterisiert, welche die Adressierung der Peers zur Kommunikation untereinander ermöglicht. Darüber hinaus entspricht jeder Peer einer technischen Komponente bzw. einem Teil einer technischen Komponente eines technischen Systems, wobei die technischen Komponenten jeweils durch entsprechende Identitäten in der Form von IED_Names (erste Spalte von links in den Tabellen) charakterisiert werden (IED = Intelligent Electronic Device). Die Tabellen in Fig. 1 enthalten ferner eine Spalte mit Statusfeldern SB (vierte Spalte von links), in denen der Status des entsprechenden Peers der jeweiligen Zeile angezeigt wird. SB = 0 bedeutet dabei, dass der Peer aktiv bzw. online ist, SB = 1 bedeutet, dass der Peer inaktiv bzw. ausgefallen ist und SB = 255 bedeutet, dass es in dem Peer-to-Peer-Netz noch keinen Peer mit der entsprechenden Peer-Identität gibt.

Zum Zeitpunkt, wenn der Peer 1 Teil des Datennetzes wird, hat er noch keine Informationen von anderen Peers erhalten, so dass das Statusfeld SB für alle Einträge gemäß der Tabelle T1 auf 255 gesetzt ist und ferner in den Spalten IED_Name und IP_ADDR keine Informationen enthalten sind.

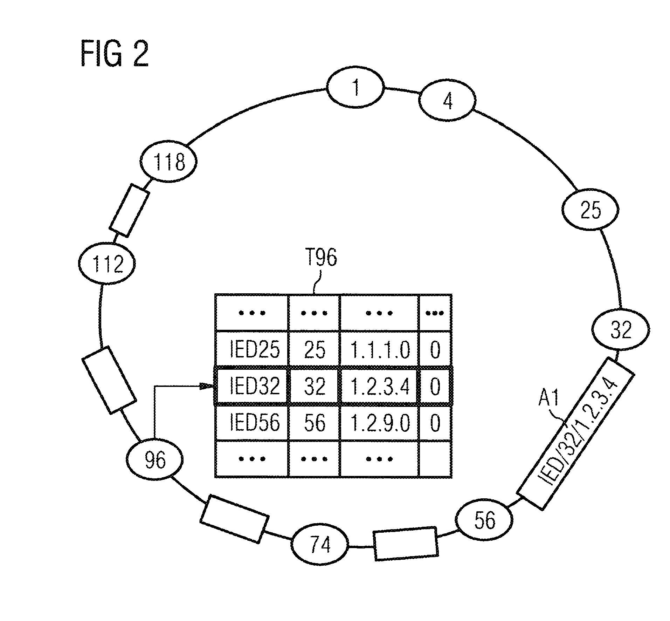

Gemäß der hier beschriebenen Ausführungsform des erfindungsgemäßen Verfahrens erhält ein Peer Informationen von anderen Peers über von den anderen Peers ausgesendeten Broadcast-Nachrichten, wie noch näher anhand von Fig. 2 erläutert wird. Diese Broadcast-Nachrichten werden in regelmäßigen Zeitabständen von den Peers ausgesendet und auch von Peer 1 empfangen. Nachdem der Peer 1 Broadcast-Nachrichten von allen aktiven Peers im Netz empfangen hat, ist die Tabelle gemäß Fig. 1 in dem Zustand T1' und weist Belegungen für alle aktiven Peers auf. In der Tabelle T1' ist ein Szenario gezeigt, bei dem die Peers mit den Peer-Identitäten 1, 4 und 7 aktiv sind, was durch SB = 0 angezeigt wird. Für diese Peers sind auch in den entsprechenden Spalten Einträge für IED_Name (beispielsweise E1Q1SB1 für den Peer 4) sowie Einträge für IP_ADDR (z.B. 192.168.1.12 für den Peer 4) enthalten. Darüber hinaus existiert in dem Peer-to-Peer-Netz ein Peer, der zwar Teil des Netzes ist, jedoch ausgefallen bzw. inaktiv ist. Dies ist der Peer 8, dessen Statusfeld SB entsprechend auf 1 gesetzt ist. Ferner gibt es in dem Peer-to-Peer-Netz keine Peers mit den Identitäten 2, 3, 5 und 6, was dadurch angezeigt wird, dass das Statusfeld SB auf 255 gesetzt ist. Für diese Peers existieren auch keine Einträge für IED_Name und IP_ADDR.

Der Vorteil der Verwendung der Hash-Tabelle gemäß Fig. 1 besteht darin, dass - im Gegensatz zu herkömmlichen Peer-to-Peer-Netzen - jeder Peer gemäß seiner Tabelle Informationen über alle anderen Peers hat, so dass sehr schnell nach Ressourcen in dem Datennetz dadurch gesucht werden kann, dass über die Tabelle die IP- oder MAC-Adresse des Peers ermittelt werden kann, der die gesuchte Ressource enthält und dieser Peer sofort direkt angesprochen werden kann. Im Unterschied hierzu sind in herkömmlichen Peer-to-Peer-Netzen einzelnen Peers nur bestimmte andere Peers im Netz bekannt, so dass aufwändige Lookups zum Auffinden von Ressourcen verwendet werden müssen. Ein weiterer Vorteil der Hash-Tabelle gemäß Fig. 1 besteht darin, dass es auch möglich ist, in bestimmten Fällen eine technische Komponente des technischen Systems nicht über eine IP- oder MAC-Adresse, sondern direkt über den entsprechenden Gerätenamen der technischen Komponente anzusprechen. Auf diese Weise kann direkt auf die technischen Komponenten ohne einen Suchprozess zugegriffen werden, was beispielsweise in Notfällen, bei denen eine technische Komponente sehr schnell eine Aktion ausführen soll bzw. abgeschaltet werden soll, erforderlich sein kann. Auf diese Weise eignet sich ein Netz, das die Tabelle gemäß Fig. 1 verwendet, besonders gut für industrielle Anwendungen.

Fig. 2 zeigt eine Ausführungsform eines erfindungsgemäßen Peer-to-Peer-Netzes in der Form einer logischen Ringstruktur nach Art eines Chord-Rings, wobei in Fig. 2 insgesamt neun Peers Teil des Netzes sind, nämlich die Peers mit den Nummern 1, 4, 25, 32, 56, 74, 96, 112 und 118. Wie bereits zuvor erwähnt, senden die Peers in regelmäßigen Abständen Broadcast-Nachrichten aus, welche den Aktivitäts-Nachrichten im Sinne der Ansprüche entsprechen. Fig. 2 zeigt hierbei ein Szenario, bei dem gerade der Peer 32 eine entsprechende Broadcast-Nachricht aussendet, wobei der Peer 96 diese Broadcast-Nachricht zuvor noch nicht erhalten hat, da er beispielsweise erst seit kurzer Zeit Mitglied des Netzes ist. Die ursprünglich abgesendete Broadcast-Nachricht ist in Fig. 2 als A1 bezeichnet, wobei durch Rechtecke zwischen den Peers die Weiterleitung der Broadcast-Nachricht in der Ringstruktur angedeutet ist. Wie sich aus Fig. 2 ergibt, enthält die Broadcast-Nachricht A1 die Geräteidentität IED32, die Nummer des Peers 32 und eine entsprechende IP-Adresse 1.2.3.4. Wenn der Peer 96 nunmehr die Broadcast-Nachricht A1 empfängt, aktualisiert er seinen entsprechenden Eintrag für den Peer 32, d.h. die Zeile 32 in Tabelle T96 wird nunmehr mit der Geräteidentität IED32 und der IP-Adresse 1.2.3.4 belegt und das Statusfeld wird auf den Status SB = 0 gesetzt. Auch die anderen Peers in dem Datennetz überprüfen bei Empfang der Broadcast-Nachricht ihre entsprechende Tabelle und aktualisieren die Einträge mit dem empfangenen Inhalt der Broadcast-Nachricht. Gemäß Fig. 2 wird somit ein einfacher Mechanismus geschaffen, wie alle Peers immer aktuelle Informationen über alle anderen Peers in dem Netz in ihrer Tabelle speichern können.

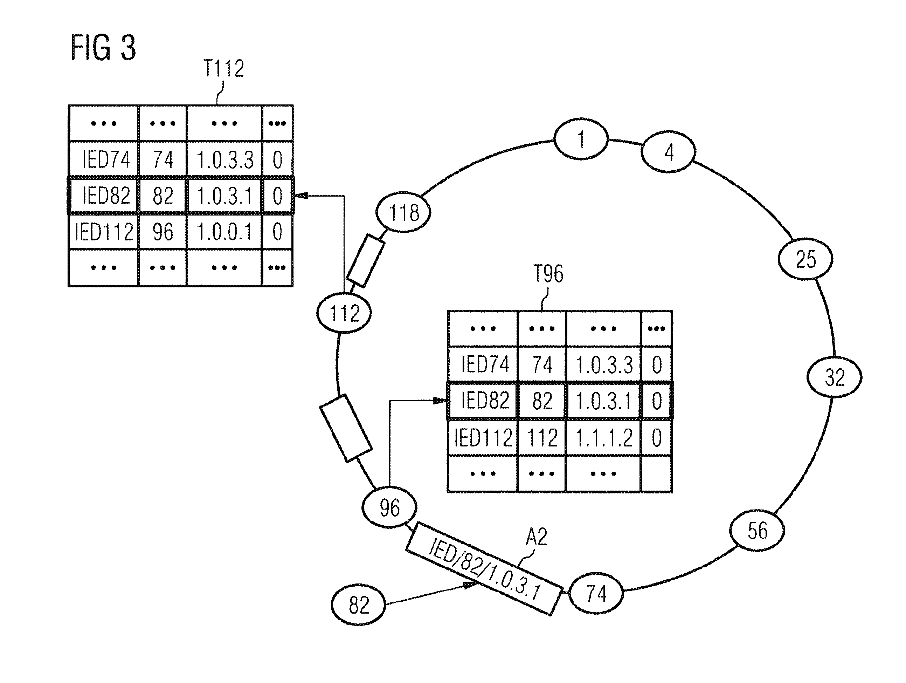

Fig. 3 zeigt das gleiche Peer-to-Peer-Netz wie Fig. 2, wobei sich nunmehr ein neuer Peer 82 dem Peer-to-Peer-Netz anschließt. Der neue Peer, der zunächst nicht die Nummer 82 hat, empfängt zunächst über eine vorbestimmte Zeitperiode die Aktivitäts-Nachrichten von allen anderen Peers und erzeugt somit die entsprechende Belegung seiner Hash-Tabelle (nicht aus Fig. 2 ersichtlich). Schließlich sucht sich der Peer einen entsprechenden Identitätswert P_ID, der noch nicht durch einen Peer des Netzes belegt ist. In Fig. 2 wählt der Peer die Peer-Identität 82 und sendet anschließend seine eigene Aktivitäts-Nachricht mit der Peer-Identität 82, dem ihm zugeordneten Gerätenamen IED82 sowie seine Netzwerkadresse 1.0.3.1 als Broadcast in das Peer-to-Peer-Netz aus. Die entsprechende Broadcast-Nachricht ist in Fig. 2 mit A2 bezeichnet, wobei wiederum durch Rechtecke das Weiterleiten der Nachricht an andere Peers in dem Netz angedeutet ist.

Fig. 3 zeigt, wie der Peer 96 seinen entsprechenden Eintrag in seiner Tabelle T96 mit den Informationen der Broadcast-Nachricht A2 aktualisiert. Die gleiche Adressierung ist analog für die Hash-Tabelle T112 des Peers 112 wiedergegeben. Durch die Übertragung der Broadcast-Nachricht A2 an alle Peers in dem Netz wird somit in kurzer Zeit der Peer 82 bekannt gemacht und kann nunmehr direkt über seinen Eintrag in den einzelnen Hash-Tabellen angesprochen werden.

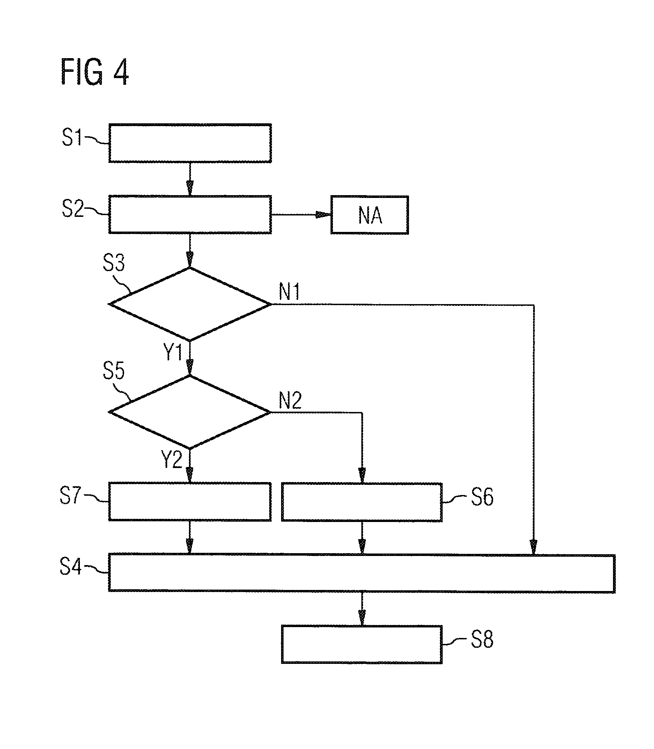

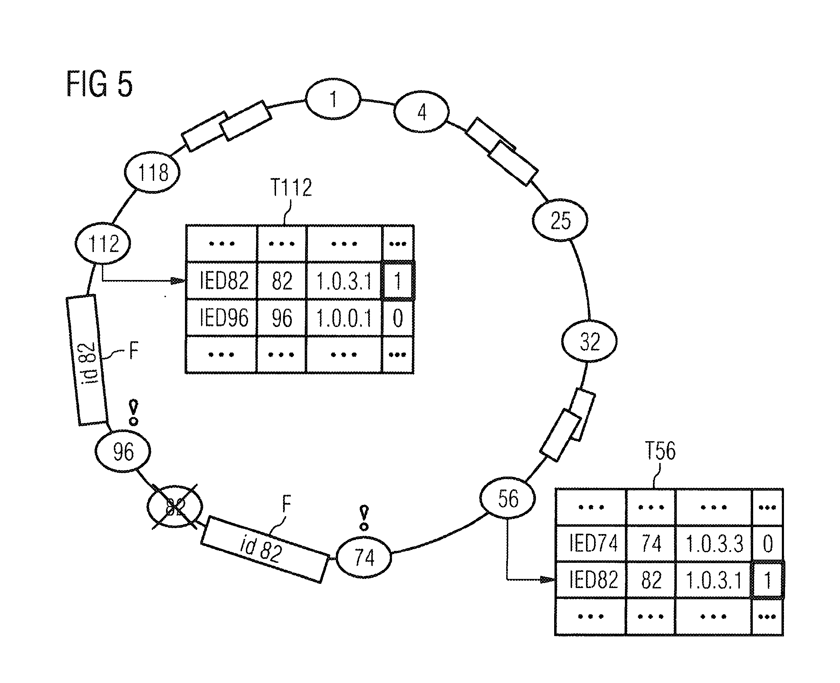

Anhand von Fig. 4 und Fig. 5 wird nachfolgend erläutert, wie der Ausfall bzw. das Verlassen eines Peers in dem Peer-to-Peer-Netz der Fig. 1 bzw. 2 detektiert werden kann. In der hier beschriebenen Ausführungsform der Erfindung erfolgt die Detektion eines Ausfalls dadurch, dass jeder Peer den Empfang von Aktivitäts-Nachrichten des benachbarten vorhergehenden und nachfolgenden Peers gemäß der Nummerierung der Peer-Identitäten überwacht. Fig. 4 zeigt den Ablauf einer solchen Überwachung. Im Schritt S1 der Fig. 4 empfängt ein Überwachungs-Peer eine Aktivitäts-Nachricht von einem anderen Peer. Der Peer schlägt dann die Peer-Identität gemäß der empfangenen Aktivitäts-Nachricht in seiner Hash-Tabelle nach. Dies erfolgt in Schritt S2. In Schritt S3 überprüft der Überwachungs-Peer, ob der Peer, von dem die Aktivitäts-Nachricht stammt, ein zu dem Überwachungs-Peer benachbarter Netzknoten aufgrund seines Identitätswerts ist. Ist dies nicht der Fall (Zweig N1), wird der Inhalt der Aktivitäts-Nachricht in dem entsprechenden Eintrag der Hash-Tabelle des Überwachungs-Peers hinterlegt und das Statusfeld dieses Eintrags aktualisiert (Schritt S4). Ist der Peer, von dem die Aktivitäts-Nachricht stammt, jedoch ein Nachbar (Zweig Y1), wird im Schritt S5 überprüft, ob es sich um einen neuen Nachbarn handelt, dessen Identitätswert zwischen dem Identitätswert des Überwachungs-Peers und des alten Nachbarn liegt. Ist dies nicht der Fall (Zweig N2), handelt es sich um den bereits überwachten alten Nachbarn, und die Überwachung wird in Schritt S6 neu gestartet. Anschließend wird in Schritt S4 wiederum eine Aktualisierung des entsprechenden Eintrags in der Hash-Tabelle vorgenommen wird, wobei in diesem Fall keine Veränderung in den Werten des Eintrags auftritt.

Sollte in Schritt S5 jedoch festgestellt werden, dass der Peer, von dem die Aktivitäts-Nachricht stammt, ein neuer Nachbar ist (Zweig Y2), wird eine neue Überwachung für diesen neuen Nachbarn in Schritt S7 gestartet und die alte Überwachung wird ungültig. Anschließend wird wiederum in Schritt S4 der entsprechende Eintrag in der Hash-Tabelle des Überwachungs-Peers aktualisiert. Nachdem das Verfahren im Schritt S4 angelangt ist, setzt sich die Überwachung fort, indem durch den Überwachungs-Peer auf den Empfang entsprechender Aktivitäts-Nachrichten gewartet wird (Schritt S8).

Fig. 5 zeigt ein Szenario, in dem der Ausfall des Peers 82 durch die benachbarten Überwachungs-Peer 74 und 96 in dem Peer-to-Peer-Netz detektiert wird. Die Detektion des Ausfalls erfolgt hierbei dadurch, dass die Überwachungs-Peers feststellen, dass über eine vorbestimmte Zeitspanne hinweg keine Aktivitäts-Nachricht mehr von dem überwachten Knoten empfangen wird. Nachdem dies von den Knoten 74 und 96 festgestellt wurde, erzeugen diese Knoten eine entsprechende Ausfall-Nachricht, welche in Fig. 5 als F bezeichnet ist und die Identität 82 des ausgefallenen Netzknotens enthält. Diese Nachricht wird sowohl von Peer 74 als auch von Peer 96 als Broadcast-Nachricht an alle anderen Peers übertragen, wie wiederum durch Rechtecke angedeutet ist. In Fig. 5 ist dabei beispielhaft die Folgeaktion der Peers 56 und 112 bei Empfang der Nachricht F angedeutet. Jeder dieser Peers setzt in seiner Hash-Tabelle T56 bzw. T112 den Status des Eintrags der Peer-Identität 82 auf inaktiv, d.h. auf SB = 1. Optional ist es auch möglich, dass ein Peer, der in einen Ruhezustand geht bzw. sich ordnungsgemäß abschaltet, selbst eine entsprechende Ausfall-Nachricht F mit seiner eigenen Identität aussendet.

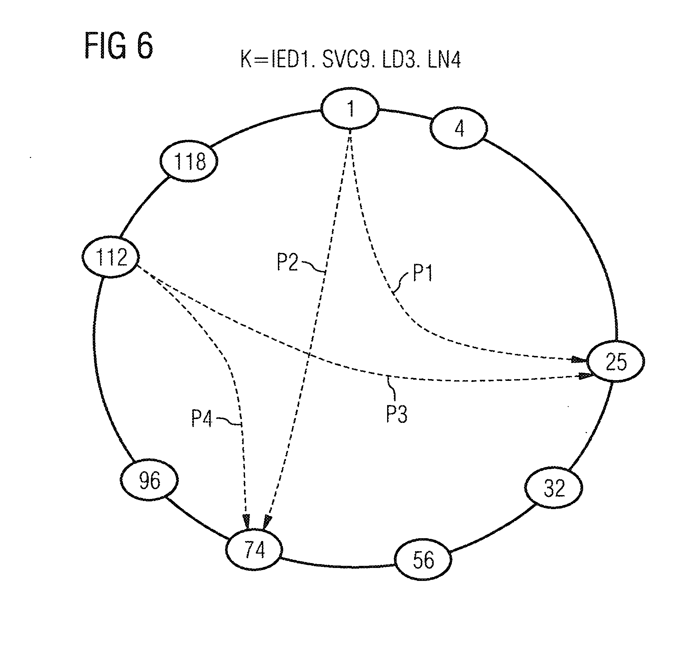

Fig. 6 verdeutlicht, wie erfindungsgemäß Ressourcen in dem Peer-to-Peer-Netz publiziert und gesucht werden können. Unter Ressource sind hierbei beliebige Daten zu verstehen, auf welche die Peers zugreifen können. Publizieren einer Ressource bedeutet, dass die Ressource selbst bzw. ein Verweis auf die Ressource in einem Peer gespeichert wird, der dann für die Ressource zuständig ist. Zum Publizieren einer Ressource wird ein entsprechendes Schlüsselwort verwendet, welches der Ressource zugeordnet ist. Im Beispiel der Fig. 6 beabsichtigt der Peer 1 die Ressource mit dem Schlüsselwort K = IED1.SVC9.LD3.LN4 zu veröffentlichen. Hierzu wird das Schlüsselwort mit einer entsprechenden Hash-Funktion auf einen Hash-Wert aus dem Wertebereich von 1 bis 128 umgewandelt. Es kann hierbei eine beliebige Hash-Funktion verwendet werden. In einer bevorzugten Ausführungsform wird eine Funktion eingesetzt, welche die Ressourcen gleichmäßig auf alle Peers verteilt. Eine solche Hash-Funktion ist beispielsweise die Fowler/Noll/Vo (FNV) Hash-Funktion, die dem Fachmann hinlänglich bekannt ist. Mit dem Schlüsselwort K ermittelt der Peer 1 einen Hash-Wert, der zwischen den Peers 25 und 32 liegt. Da in der Ausführungsform der Fig. 6 jeder Peer für alle nachfolgenden Identitätswerte bis zum nächsten Peer zuständig ist, folgt hieraus, dass die Ressource auf dem Peer 25 publiziert wird.

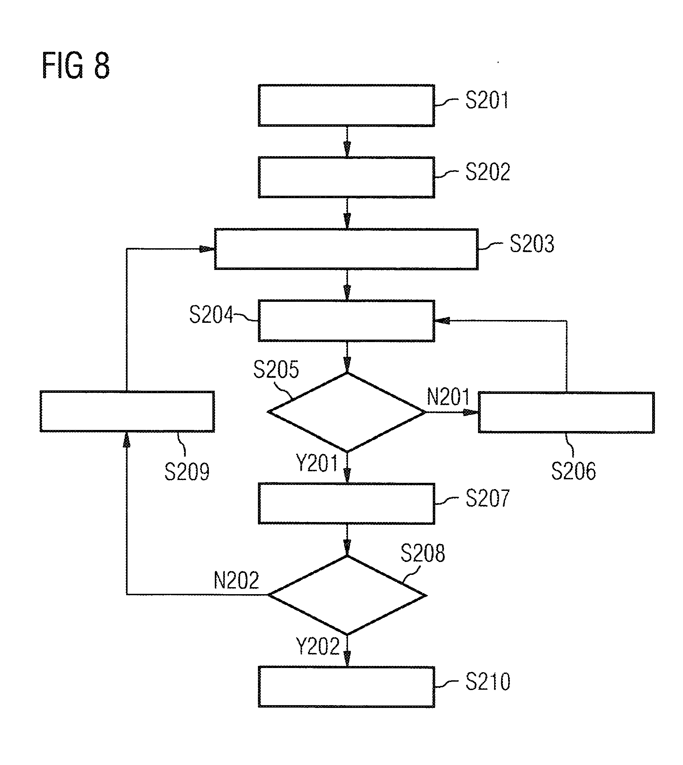

In der Ausführungsform der Fig. 6 ist ein Replikationsmechanismus integriert, wonach die Ressource auch noch auf einem weiteren Peer repliziert wird, wodurch eine Replikationsgruppe von zwei Peers für jede Ressource gebildet wird, d.h. jede Ressource wird auf zwei Peers veröffentlicht. Gemäß einem Algorithmus, der noch näher in Bezug auf Fig. 8 erläutert wird, wird als weiterer Peer zur Veröffentlichung der Ressource der Peer 74 ermittelt. Mit den Pfeilen P1 und P2 ist in Fig. 6 die Publikation der Ressource auf den entsprechenden Peers 25 und 74 angedeutet.

Fig. 6 zeigt ferner die Suche nach der Ressource mit dem Schlüsselwort K durch den Peer 112. Zur Suche wird analog das Schlüsselwort K in einen entsprechenden Hash-Wert gemäß der Hash-Funktion umgewandelt und anschließend der für den Hash-Wert zuständige Peer bestimmt. Analog wie bei der Publikation findet der Peer 112 nunmehr den Peer 25 als zuständigen Peer für die Ressource. Da die Hash-Tabelle des Peers 112 bereits die IP- bzw. MAC-Adresse des Peers 25 enthält, kann dieser Peer direkt angesprochen werden. Der Peer 112 kann mit einem entsprechenden Algorithmus auch den weiteren Peer 74 ermitteln, auf dem die Ressource ebenfalls publiziert ist. Da in der Hash-Tabelle des Peers 112 auch die IP- bzw. MAC-Adresse von diesem Peer hinterlegt ist, kann er unmittelbar auch auf die Ressource im Peer 74 zugreifen. Die Suche nach den Ressourcen durch den Peer 112 ist hierbei mit den Pfeilen P3 und P4 angedeutet. Wie sich aus Fig. 6 ergibt, gestaltet sich die Suche nach Ressourcen in dem erfindungsgemäßen Peer-to-Peer-Netz sehr einfach, da jeder Peer alle Informationen zu den anderen Peers enthält und somit ein Peer, der eine Ressource sucht, denjenigen Peer direkt ansprechen kann, der für die entsprechende Ressource zuständig ist.

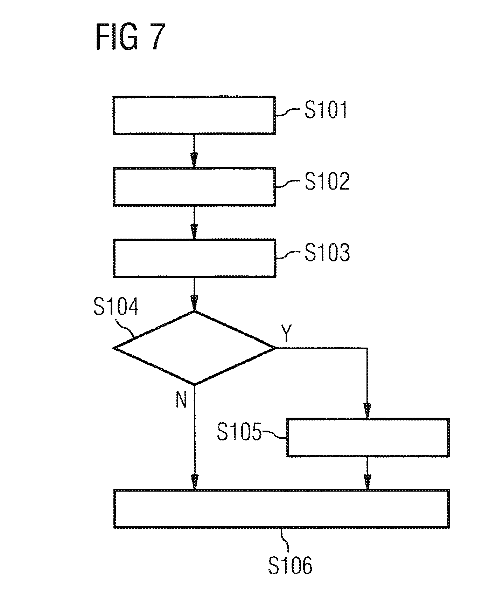

Fig. 7 zeigt ein Ablaufdiagramm, welches die Aktionen eines Peers verdeutlicht, der Ressourcen in dem Peer-to-Peer-Netz publiziert hat und eine entsprechende Deaktivierungs-Nachricht F gemäß Fig. 5 empfangen hat. Hierbei wird im Schritt S101 die Nachricht F empfangen. Der Peer schlägt dann die entsprechende Peer-Identität in seiner Tabelle nach (Schritt S102) und markiert dann den entsprechenden Eintrag in der Tabelle als inaktiv, d.h. SB = 1 (Schritt S103). Anschließend überprüft der Peer, ob er Ressourcen von sich auf dem Peer in der Deaktivierungs-Nachricht F veröffentlicht hat (Schritt S104). Ist dies der Fall (Zweig Y), initialisiert der Peer einen neuen Publikationsprozess und veröffentlicht die Ressourcen nochmals in dem Netz, wie durch Schritt S105 wiedergegeben ist. Die Republikation der Daten ist hierbei identisch mit der anhand von Fig. 6 beschriebenen Publikation, jedoch ist der Auslöser ein anderer. Anschließend wartet der Peer wie gewohnt auf den Empfang von Aktivitäts-Nachrichten in Schritt S106. Sollte im Schritt S104 festgestellt werden, dass der Peer, der inaktiv geworden ist, keine Ressourcen enthält, die von dem die Nachricht F empfangenden Peer veröffentlicht wurden (Zweig N), wird ohne eine nochmalige Veröffentlichung zu Schritt S106 übergegangen.

Fig. 8 zeigt ein Ablaufdiagramm, welches die bereits bei der Beschreibung von Fig. 6 erwähnte Replikation von veröffentlichten Ressourcen auf mehreren Peers wiedergibt. Fig. 8 zeigt ein iteratives Verfahren, welches in Schritt S201 mit dem Iterationswert Iteration = 0 und einer festen Primzahl magic_prime = const gestartet wird. Zunächst wird mit Hilfe der Hash-Funktion das Schlüsselwort der entsprechend zu publizierenden Ressource auf den Hash-Wert abgebildet, was im Schritt S202 erfolgt. Der Hash-Wert wird hierbei als hash_value und das Schlüsselwort als keyword bezeichnet. Durch eine entsprechende Funktion add_circular (hash_value, Iteration · magic_prime) wird in Schritt S203 die Peer-Identität ermittelt, auf der die Ressource zu publizieren ist. Bei der ersten Iteration ist dies die Peer-Identität des Peers mit dem nächst kleinerem Identitätswert in Bezug auf den hash_value.

In Schritt S204 wird dann die Peer-Identität in der Hash-Tabelle des publizierenden Peers nachgeschlagen. Anschließend wird in Schritt S205 überprüft, ob der Peer gemäß dem Eintrag in der Hash-Tabelle des publizierenden Peers aktiv ist. Ist dies der Fall (Zweig Y201) wird die Peer-Identität einer entsprechenden Liste hinzugefügt, wobei beim ersten Iterationsschritt die Peer-Identität der erste Eintrag in dieser Liste ist (Schritt S207). Das Hinzufügen zu dieser Liste erfolgt mit einer entsprechenden Funktion add(peer_id, peer_ids[ ]). Ergibt sich in Schritt S205 jedoch, dass der nachgeschlagene Peer nicht aktiv ist (Zweig N201), wird der davor in der Hash-Tabelle stehende Eintrag als Peer-Identität verwendet und zu Schritt S204 zurückgegangen.

Nach der Hinzufügung des entsprechenden Peers zur Liste im Schritt S207, wird überprüft, ob die Variable Iteration bereits einen vorgegebenen Replikationsfaktor erreicht hat (Schritt 5208). Ist dies nicht der Fall (Zweig N202), wird im Schritt S209 die Variable Iteration um einen Wert hoch gesetzt. Hat die Variable Iteration den Replikationsfaktor erreicht (Zweig Y202), werden alle Peers in der Liste ausgegeben (Schritt S210), und auf diesen Peers werden die Ressourcen dann publiziert.

Nach dem Hochsetzen der Variablen Iteration in Schritt S209 wird zu Schritt S203 zurückgegangen, wobei nunmehr zu dem ermittelten hash_value die Primzahl magic_prime multipliziert mit dem neuen Wert der Variablen Iteration hinzuaddiert wird. Die dabei verwendete Funktion add_ciruclar berücksichtigt hierbei, dass eine logische Ringstruktur des Peer-to-Peer-Netzes vorliegt, so dass bei Überschreiten des Wertebereichs der Hash-Werte die Addition bei Beginn des Wertebereichs fortgesetzt wird. Mit Hilfe der Primzahl magic_prime wird in dem Verfahren gemäß Fig. 8 eine sehr gleichmäßige Replikation von Ressourcen innerhalb einer Replikationsgruppe von Peers erreicht, wobei die Anzahl der Peers, auf denen die Ressourcen repliziert werden, durch einen entsprechenden Replikationsfaktor festgelegt wird. Durch die Replikation wird insbesondere sichergestellt, dass die Ressourcen redundant in dem Peer-to-Peer-Netz hinterlegt sind und es bei Ausfall eines Peers nicht zum Verlust der Ressource kommt.

## Patentansprüche

1. Verfahren zum Betrieb eines dezentralen Kommunikationsnetzes mit einer Vielzahl von Netzknoten (1,..., 128), wobei jedem Netzknoten (1,..., 128) ein Identitätswert (P_ID) aus einem Wertebereich von Identitätswerten (P_ID) sowie eine Adresse (IP_ADDR) zur Kommunikation des jeweiligen Netzknotens (1,..., 128) mit anderen Netzknoten (1,..., 128) zugewiesen ist und jeder Netzknoten (1,..., 128) für ein Intervall von Identitätswerten (P_ID) aus dem Wertebereich zuständig ist, bei dem:
- jeder betriebsbereite Netzknoten (1,..., 128) eine Tabelle (T1, T56, T96, T112) verwaltet, welche für zumindest die betriebsbereiten Netzknoten (1 ,..., 128) im Kommunikationsnetz jeweils einen Eintrag enthält, der zumindest den Identitätswert (P_ID) und die Adresse (IP_ADDR) des jeweiligen Netzknotens (1,..., 128) umfasst;
- jeder betriebsbereite Netzknoten (1,..., 128) regelmäßig Aktivitäts-Nachrichten (A1, A2) an die anderen Netzknoten des Kommunikationsnetzes aussendet, wobei die Aktivitäts-Nachrichten (A1, A2) jeweils zumindest den Identitätswert (P_ID) und die Adresse (IP_ADDR) des jeweiligen Netzknotens (1,..., 128) beinhalten und jeder betriebsbereite Netzknoten (1,..., 128) bei Empfang einer Aktivitäts-Nachricht (A1, A2) seine Tabelle (T1, T56, T96, T112) mit dem Inhalt der Aktivitäts-Nachricht (A1, A2) synchronisiert;
- in dem Kommunikationsnetz festgestellt wird, wenn ein betriebsbereiter Netzknoten (1,..., 128) inaktiv wird, wobei ein inaktiver Netzknoten (1,..., 128) keine Aktivitäts-Nachrichten (A1, A2) mehr aussendet, wobei die Feststellung, dass ein jeweiliger Netzknoten (1,..., 128) inaktiv wird, über zumindest einen, dem jeweiligen Netzknoten (1,..., 128) zugeordneten Überwachungsknoten erfolgt, wobei der zumindest eine Überwachungsknoten überwacht, ob der jeweilige Netzknoten (1Q5" 128) Aktivitäts-Nachrichten (A1, A2) aussendet, **dadurch gekennzeichet dass** der zumindest eine Überwachungsknoten im Falle, dass der jeweilige Netzknoten (1,..., 128) keine Aktivitäts-Nachrichten (A1, A2) mehr aussendet, eine Deaktivierungs-Nachricht (F) an alle anderen Netzknoten (1,..., 128) aussendet, wobei die Deaktivierungs-Nachricht (F) zumindest den Identitätswert (P_ID) des jeweiligen Netzknotens (1,..., 128) enthält und wobei jeder betriebsbereite Netzknoten (1, · 120) bei Empfang einer Deaktivierungs-Nachricht (F) in seiner Tabelle ein Statusfeld (SB) des Eintrags des Netzknotens gemäß dem Identitätswert (P_ID) in der Deaktivierungs nachricht (D) auf inaktiv setzt.

2. Verfahren nach Anspruch 1, bei dem das Verfahren in einem Kommunikationsnetz eines technischen Systems mit einer Mehrzahl von technischen Komponenten eingesetzt wird, wobei zumindest einem Teil der technischen Komponenten jeweils eine Geräteidentität (IED_Name) zum Zugriff auf die technische Komponente zugewiesen ist und wobei einer Geräteidentität (IED_Name) zumindest ein Netzknoten (1,..., 128) des Kommunikationsnetzes zugeordnet ist, wobei ein Eintrag der Tabelle (T1, T56, T96, T112) der jeweiligen Netzknoten (1,..., 128) ferner die Geräteidentität (IED_Name) umfasst, welcher der dem Eintrag entsprechende Netzknoten (1,..., 128) zugeordnet ist, und wobei mit einer jeweiligen Aktivitäts-Nachricht (A1, A2) ferner die Geräteidentität (IED_Name) übermittelt wird, welcher der Netzknoten (1,..., 128) zugeordnet ist, der die jeweilige Aktivitäts-Nachricht (A1, A2) aussendet.

3. Verfahren nach Anspruch 2, bei dem das technische System ein Spannungsverteilsystem, insbesondere ein Umspannwerk, umfasst, wobei die technischen Komponenten insbesondere Schalteinheiten in dem Spannungsverteilsystem umfassen.

4. Verfahren nach Anspruch 2 oder 3, bei dem das technische System ein Energieerzeugungssystem, insbesondere eine Turbine, umfasst.

5. Verfahren nach einem der Ansprüche 2 bis 4, bei dem das technische System eine Automatisierungsanlage, insbesondere eine Fertigungsstraße, umfasst.

6. Verfahren nach einem der vorhergehenden Ansprüche, bei dem die Aktivitäts-Nachrichten (A1, A2) als Broadcast-Nachrichten von dem jeweiligen Netzknoten in das Kommunikationsnetz ausgesendet werden.

7. Verfahren nach einem der vorhergehenden Ansprüche, bei dem die Deaktivierungs-Nachricht (F) als Broadcast-Nachricht von dem zumindest einen Überwachungsknoten in das Kommunikationsnetz ausgesendet wird.

8. Verfahren nach einem der vorhergehenden Ansprüche, bei dem der zumindest eine Überwachungsknoten ein Netzknoten ist, der in der Reihenfolge der Identitätswerte (P_ID) zum jeweiligen überwachten Netzknoten (1,..., 128) benachbart ist, wobei insbesondere zwei benachbarte Netzknoten (1,..., 128) die Überwachungsknoten eines überwachten Netzknotens (1, ..., 128) sind.

9. Verfahren nach Anspruch 8, bei dem der zumindest eine Überwachungsknoten im Falle, dass er eine Aktivitäts-Nachricht von einem neu in das Kommunikationsnetz hinzukommenden oder aktivierten Netzknoten (1,..., 128) empfängt, überprüft, ob der neue Netzknoten (1,..., 128) ein neuer benachbarter Netzknoten (1,..., 128) ist, wobei der Überwachungsknoten im Falle, dass der neue Netzknoten (1, ..., 128) ein neuer benachbarter Netzknoten (1,..., 128) ist, die Überwachung dieses Netzknotens (1,..., 128) beginnt.

10. Verfahren nach einem der vorhergehenden Ansprüche, bei dem ein jeweiliger Netzknoten (1,..., 128) eine seinen Identitätswert (P_ID) enthaltende Deaktivierungs-Nachricht (F) an alle anderen Netzknoten (1,..., 128) aussendet, wenn sich der jeweilige Netzknoten (1,..., 128) abschaltet.

11. Verfahren nach einem der vorhergehenden Ansprüche, bei dem die Tabelle (T1, T56, T96, T112) eines jeweiligen Netzknotens (1,..., 128) Einträge für alle Identitätswerte (P_ID) des Wertebereichs enthält, wobei für jeden Eintrag über ein Statusfeld (SB) angezeigt wird, ob der Netzknoten (1, ..., 128) des Eintrags im Kommunikationsnetz vorhanden ist oder betriebsbereit ist oder inaktiv ist.

12. Verfahren nach Anspruch 11, bei dem im Falle, dass in einem jeweiligen Netzknoten (1,..., 128) Aktivitäts-Nachrichten (A1, A2) von einem Netzknoten (1,..., 128) empfangen werden, der in dem Kommunikationsnetz zuvor noch nicht vorhanden oder zuvor inaktiv war, der entsprechende Eintrag des zuvor noch nicht vorhandenen oder zuvor inaktiven Netzknotens (1,..., 128) der Tabelle mit dem Inhalt der Aktivitäts-Nachricht (A1, A2) synchronisiert wird, wobei das Statusfeld (SB) des entsprechenden Eintrags auf aktiv gesetzt wird.

13. Verfahren nach einem der vorhergehenden Ansprüche, bei dem jeder betriebsbereite Netzknoten (1,..., 128) für das Intervall von Identitätswerten (P_ID) zwischen seinem Identitätswert (P_ID) und dem nächstgrößeren oder nächstkleineren Identitätswert seines betriebsbereiten Nachbarknotens zuständig ist.

14. Verfahren nach Anspruch 13 in Kombination mit einem der Ansprüche 11 bis 12, bei dem bei einer Veränderung des Statusfeldes (SB) eines Eintrags der Tabelle (T1, T56, T96, T112) der betriebsbereiten Netzknoten (1, ..., 128) die Intervalle der Identitätswerte (P_ID), für welche die betriebsbereiten Netzknoten (1,..., 128) zuständig sind, basierend auf der sich verändernden Anzahl an betriebsbereiten Netzknoten (1,..., 128) angepasst werden.

15. Verfahren nach einem der vorhergehenden Ansprüche, bei dem in dem Kommunikationsnetz durch zumindest einen Teil der Netzknoten (1,..., 128) Ressourcen publiziert werden, indem ein oder mehrere, einer Ressource zugeordnete Schlüsselwörter (K) auf einen Identitätswert (P_ID) abgebildet werden, wobei die Ressource oder ein Verweis auf die Ressource auf einem Publikationsknoten gespeichert wird, welcher derjenige Netzknoten (1,..., 128) ist, der für das Intervall zuständig ist, welches den Identitätswert (P_ID) enthält, auf dem das oder die Schlüsselwörter (K) abgebildet sind.

16. Verfahren nach Anspruch 15, bei dem die Identitätswerte (P_ID) Hash-Werte sind, wobei die Abbildung des oder der Schlüsselwörter (K) auf den Identitätswert (P_ID) mit einer Hash-Funktion erfolgt.

17. Verfahren nach Anspruch 16, bei dem die Hash-Funktion derart gewählt ist, dass eine gleichmäßige Verteilung der Ressourcen auf die Netzknoten (1,..., 128) erreicht wird.

18. Verfahren nach einem der Ansprüche 15 bis 17, wobei bei der Publikation einer Ressource eine Replikation derart durchgeführt wird, dass die Ressource oder ein Verweis auf die Ressource außer auf dem Publikationsknoten auf weiteren Netzknoten (1,..., 128) gespeichert wird.

19. Verfahren nach Anspruch 18, bei dem die weiteren Netzknoten (1,..., 128) durch Addition von Primzahlen zu dem Identitätswert (P_ID) des Publikationsknotens bestimmt werden.

20. Verfahren nach einem der Ansprüche 15 bis 19, bei dem im Falle, dass sich die Zuständigkeit eines Netzknotens (1,..., 128) für eine Ressource in dem Kommunikationsnetz verändert, die Ressource in dem Kommunikationsnetz nochmals publiziert wird.

21. Verfahren nach einem der Ansprüche 15 bis 20, bei dem nach Ressourcen in dem Kommunikationsnetz derart gesucht wird, dass ein suchender Netzknoten (1,..., 128) das oder die Schlüsselwörter (K) der Ressource auf den Identitätswert (P_ID) abbildet und mit Hilfe seiner Tabelle (T1, T56, T96, T112) den Netzknoten ermittelt, der für die Ressource zuständig ist, wobei dieser Netzknoten über seine Adresse (IP_ADDR) in der Tabelle angesprochen wird.

22. Verfahren nach einem der vorhergehenden Ansprüche, bei dem das Verfahren in einem Peer-to-Peer-Netz, insbesondere mit einer logischen Ringstruktur der Peers, eingesetzt wird.

23. Dezentrales Kommunikationsnetz mit einer Vielzahl von Netzknoten (1,..., 128), wobei jedem Netzknoten (P_ID) ein Identitätswert (P_ID) aus einem Wertebereich von Identitätswerten (P_ID) sowie eine Adresse (IP_ADDR) zur Kommunikation des jeweiligen Netzknotens (1,..., 128) mit anderen Netzknoten (1,..., 128) zugewiesen ist und jeder Netzknoten (1,..., 128) für ein Intervall von Identitätswerten (P_ID) aus dem Wertebereich zuständig ist, wobei das Kommunikationsnetz derart ausgestaltet ist, dass im Betrieb:
- jeder betriebsbereite Netzknoten (1,..., 128) eine Tabelle (T1, T56, T96, T112) verwaltet, welche für zumindest die betriebsbereiten Netzknoten (1,..., 128) im Kommunikationsnetz jeweils einen Eintrag enthält, der den Identitätswert (P_ID) und die Adresse (IP_ADDR) des jeweiligen Netzknotens (1,..., 128) umfasst;
- jeder betriebsbereite Netzknoten (1,..., 128) regelmäßig Aktivitäts-Nachrichten (A1, A2) an die anderen Netzknoten des Kommunikationsnetzes aussendet, wobei die Aktivitäts-Nachrichten (A1, A2) jeweils zumindest den Identitätswert (P_ID) und die Adresse (IP_ADDR) des jeweiligen Netzknotens (1,..., 128) beinhalten und jeder betriebsbereite Netzknoten (1,..., 128) bei Empfang einer Aktivitäts-Nachricht (A1, A2) seine Tabelle (T1, T56, T96, T112) mit dem Inhalt der Aktivitäts-Nachricht (A1, A2) synchronisiert;
- in dem Kommunikationsnetz festgestellt wird, wenn ein betriebsbereiter Netzknoten (1,..., 128) inaktiv wird, wobei ein inaktiver Netzknoten (1,..., 128) keine Aktivitäts-Nachrichten (A1, A2) mehr aussendet, wobei die Feststellung, dass ein jeweiliger Netzknoten (1,..., 128) inaktiv wird, über zumindest einen, dem jeweiligen Netzknoten (1,..., 128) zugeordneten Überwachungsknoten erfolgt, wobei der zumindest eine Überwachungsknoten überwacht, ob der jeweilige Netzknoten (1 .., 128) Aktivitäts-Nachrichten (A1, A2) aussendet, **dadurch gekennzeichnet dass** der zumindest eine Überwachungsknoten im Falle, dass der jeweilige Netzknoten (1,..., 128) keine Aktivitäts-Nachrichten (A1, A2) mehr aussendet, eine Deaktivierungs-Nachricht (F) an alle anderen Netzknoten (1,..., 128) aussendet, wobei die Deaktivierungs-Nachricht (F) zumindest den Identitätswert (P_ID) des jeweiligen Netzknotens (1,..., 128) enthält und wobei jeder betriebsbereite Netzknoten (1, 120) bei Empfang einer Deaktivierungs-Nachricht (F) in seiner Tabelle ein Statusfeld (SB) des Eintrags des Netzknotens gemäß Identitätswert (P-ID) in der Deaktivierungsnachricht (D) auf inkactiv setzt.

24. Kommunikationsnetz nach Anspruch 23, bei dem das Kommunikationsnetz derart ausgestaltet ist, dass ein Verfahren nach einem der Ansprüche 2 bis 22 durchführbar ist.

## Claims

1. Method for operating a distributed communications network having a multiplicity of network nodes (1, ..., 128), with each network node (1, ..., 128) being assigned an identity value (P_ID) from a range of identity values (P_ID), and an address (IP_ADDR) for the respective network node (1, ..., 128) to communicate with other network nodes (1, ..., 128), and each network node (1, ..., 128) being responsible for a sub-range of identity values (P_ID) from the range, wherein,
- each operational network node (1, ..., 128) manages a table (T1, T56, T96, T112), which contains an entry for each of at least the operational network nodes (1, ..., 128) in the communications network, said entry comprising at least the identity value (P_ID) and the address (IP_ADDR) of the respective network node (1, ..., 128);
- each operational network node (1, ..., 128) regularly sends activity messages (A1, A2) to the other network nodes of the communications network, with the activity messages (A1, A2) each containing at least the identity value (P_ID) and the address (IP_ADDR) of the respective network node (1, ..., 128), and each operational network node (1, ..., 128), on receiving an activity message (A1, A2), synchronising its table (T1, T56, T96, T112) with the contents of the activity message (A1, A2);
- it is established in the communications network if an operational network node (1, ..., 128) becomes inactive, where an inactive network node (1, ..., 128) no longer transmits activity messages (A1, A2), wherein establishing if a particular network node (1, ..., 128) becomes inactive is performed via at least one monitoring node, which is assigned to the particular network node (1, ..., 128), with the at least one monitoring node monitoring whether the particular network node (1, ..., 128) is transmitting activity messages (A1, A2), **characterised in that** in the event that the particular network node (1, ..., 128) is no longer transmitting activity messages (A1, A2), the at least one monitoring node transmits a deactivation message (F) to all the other network nodes (1, ..., 128), where the deactivation message (F) contains at least the identity value (P_ID) of the particular network node (1, ..., 128) and wherein each operational network node (1, ..., 128), which receives a deactivation message (F), sets to inactive in its table a status field (SB) of the entry of the network node given by the identity value (P_ID) in the deactivation message (F).

2. Method according to claim 1, wherein the method is used in a communications network of an engineering system having a plurality of engineering components, where at least some of the engineering components are each assigned a device identity (IED_Name) for accessing the engineering component, and where a device identity (IED_Name) is assigned at least one network node (1, ..., 128) of the communications network, where each entry in the table (T1, T56, T96, T112) of the respective network nodes (1, ..., 128) also contains the device identity (IED_Name) to which the network node (1, ..., 128) corresponding to the entry is assigned, and where a respective activity message (A1, A2) is used to communicate additionally the device identity (IED_Name) that is assigned to the network node (1, ..., 128) that is transmitting the respective activity message (A1, A2).

3. Method according to claim 2, wherein the engineering system comprises a voltage distribution system, in particular a substation, where the engineering components comprise, in particular, switching units in the voltage distribution system.

4. Method according to claim 2 or 3, wherein the engineering system comprises a power generation system, in particular a turbine.

5. Method according to any of the claims 2 to 4, wherein the engineering system comprises an automation system, in particular a production line.

6. Method according to any of the previous claims, wherein the activity messages (A1, A2) are transmitted into the communications network by the respective network node as broadcast messages.

7. Method according to one of the preceding claims, wherein the deactivation message (F) is transmitted as a broadcast message from the at least one monitoring node into the communication network.

8. Method according to one of the preceding claims, wherein the at least one monitoring node is a network node that is a neighbour of the respective monitored network node (1, ..., 128) in the sequence of identity values (P_ID), where, in particular, two neighbouring network nodes (1, ..., 128) are the monitoring nodes of a monitored network node (1, ..., 128).

9. Method according to claim 8, wherein the at least one monitoring node, in the event that it receives an activity message from a network node (1, ..., 128) that is a new addition to the communications network or newly activated network node, checks whether the new network node (1, ..., 128) is a new neighbouring network node (1, ..., 128), where, if the new network node (1, ..., 128) is a new neighbouring network node (1, ..., 128), the monitoring node starts to monitor this network node (1, ..., 128).

10. Method according to any of the previous claims, wherein a respective network node (1, ..., 128) transmits a deactivation message (F) containing its identity value (P_ID) to all the other network nodes (1, ..., 128) when the respective network node (1, ..., 128) switches itself off.

11. Method according to any of the previous claims, wherein the table (T1, T56, T96, T112) of a respective network node (1, ..., 128) contains entries for all the identity values (P_ID) in the range, with a status field (SB) being used for each entry to indicate whether the network node (1, ..., 128) of the entry is present in the communications network, or whether it is operational or inactive.

12. Method according to claim 11, wherein if, in a respective network node (1, ..., 128), activity messages (A1, A2) are being received from a network node (1, ..., 128) that was previously not yet present in the communications network or was previously inactive, the corresponding entry in the table for the previously not yet present or previously inactive network node (1, ..., 128) is synchronised with the contents of the activity message (A1, A2), with the status field (SB) of the corresponding entry being set to active.

13. Method according to any of the previous claims, wherein each operational network node (1, ..., 128) is responsible for the sub-range of identity values (P_ID) between its identity value (P_ID) and the next larger or next smaller identity value of its operational neighbour node.

14. Method according to claim 13 in combination with any of claims 11 to 12, wherein if the status field (SB) of an entry in the table (T1, T56, T96, T112) for the operational network nodes (1, ..., 128) changes, the sub-ranges of the identity values (P_ID) for which the operational network nodes (1, ..., 128) are responsible are adapted on the basis of the changing number of operational network nodes (1, ..., 128).

15. Method according to any of the previous claims, wherein resources are published in the communications network by at least some of the network nodes (1, ..., 128) by means of one or more keywords (K) assigned to a resource being mapped onto an identity value (P_ID), with the resource or a link to the resource being saved on a publication node, which is the network node (1, ..., 128) that is responsible for the sub-range containing the identity value (P_ID) on which the keyword(s) (K) is/are mapped.

16. Method according to claim 15, wherein the identity values (P_ID) are hash values, with the keyword(s) (K) being mapped onto the identity value (P_ID) by a hash function.

17. Method according to claim 16, wherein the hash function is selected to achieve an even distribution of resources on the network nodes (1, ..., 128).

18. Method according to any of claims 15 to 17, wherein on publishing a resource, a replication is made so that the resource or a link to the resource is saved on other network nodes (1, ..., 128) in addition to the publication node.

19. Method according to claim 18, wherein the additional network nodes (1, ..., 128) are determined by adding prime numbers to the identity value (P_ID) of the publication node.

20. Method according to any of claims 15 to 19, wherein in the event that the responsibility of a network node (1, ..., 128) for a resource in the communications network changes, the resource is republished in the communications network.

21. Method according to any of claims 15 to 20, wherein searching for resources in the communications network is done by means of a searching network node (1, ..., 128) mapping the keyword(s) (K) of the resource onto the identity value (P_ID) and using its table (T1, T56, T96, T112) to identify the network node responsible for the resource, with this network node being addressed via its address (IP_ADDR) in the table.

22. Method according to any of the previous claims, wherein the method is used in a peer-to-peer network, in particular having a logical ring structure of the peers.

23. Distributed communications network having a multiplicity of network nodes (1, ..., 128), with each network node (1, ..., 128) being assigned an identity value (P_ID) from a range of identity values (P_ID), and an address (IP_ADDR) for the respective network node (1, ..., 128) to communicate with other network nodes (1, ..., 128), and each network node (1, ..., 128) being responsible for a sub-range of identity values (P_ID) from the range, with the communications network being designed so that in operation
- each operational network node (1, ..., 128) manages a table (T1, T56, T96, T112), which contains an entry for each of at least the operational network nodes (1, ..., 128) in the communications network, said entry comprising the identity value (P_ID) and the address (IP_ADDR) of the respective network node (1, ..., 128);
- each operational network node (1, ..., 128) regularly sends activity messages (A1, A2) to the other network nodes of the communications network, with the activity messages (A1, A2) each containing at least the identity value (P_ID) and the address (IP_ADDR) of the respective network node (1, ..., 128), and each operational network node (1, ..., 128), on receiving an activity message (A1, A2), synchronising its table (T1, T56, T96, T112) with the contents of the activity message (A1, A2),
- it is established in the communications network if an operational network node (1, ..., 128) becomes inactive, where an inactive network node (1, ..., 128) no longer transmits activity messages (A1, A2), wherein establishing if a particular network node (1, ..., 128) becomes inactive is performed via at least one monitoring node, which is assigned to the particular network node (1, ..., 128), with the at least one monitoring node monitoring whether the particular network node (1, ..., 128) is transmitting activity messages (A1, A2), **characterised in that** in the event that the particular network node (1, ..., 128) is no longer transmitting activity messages (A1, A2), the at least one monitoring node transmits a deactivation message (F) to all the other network nodes (1, ..., 128), where the deactivation message (F) contains at least the identity value (P_ID) of the particular network node (1, ..., 128) and wherein each operational network node (1, ..., 128), which receives a deactivation message (F), sets to inactive in its table a status field (SB) of the entry of the network node given by the identity value (P_ID) in the deactivation message (F).

24. Communications network according to claim 23, wherein the communications network is designed so that a method according to any of claims 2 to 22 can be performed.

## Revendications

1. Procédé d'exploitation d'un réseau de communication décentralisé comportant une pluralité de noeuds de réseau (1, ..., 128), à chaque noeud de réseau (1, ..., 128) étant attribuée une valeur d'identité (P_ID) tirée d'une plage de valeurs d'identité (P_ID) ainsi qu'une adresse (IP_ADDR) aux fins de la communication du noeud de réseau respectif (1, ..., 128) avec d'autres noeuds de réseau (1, ..., 128), et chaque noeud de réseau (1, ..., 128) étant compétent pour un intervalle de valeurs d'identité (P_ID) de la plage de valeurs, dans lequel :
- chaque noeud de réseau prêt à fonctionner (1, ..., 128) gère une table (T1, T56, T96, T112) qui contient, pour au moins les noeuds de réseau prêts à fonctionner (1, ..., 128) dans le réseau de communication, respectivement une entrée qui comprend au moins la valeur d'identité (P_ID) et l'adresse (IP_ADDR) de chaque noeud de réseau (1, ...., 128) ;
- chaque noeud de réseau prêt à fonctionner (1, ..., 128) envoie régulièrement des messages d'activité (A1, A2) aux autres noeuds de réseau du réseau de communication, les messages d'activité (A1, A2) contenant respectivement au moins la valeur d'identité (P_ID) et l'adresse (IP_ADDR) de chaque noeud de réseau (1, ..., 128), et chaque noeud de réseau prêt à fonctionner (1, ..., 128) synchronisant sa table (T1, T56, T96, T112) sur le contenu du message d'activité (A1, A2) à la réception d'un message d'activité (A1, A2) ;
- il est constaté, dans le réseau de communication, si un noeud de réseau prêt à fonctionner (1, ..., 128) devient inactif, un noeud de réseau inactif (1, ..., 128) n'émettant plus de messages d'activité (A1, A2), la constatation qu'un noeud de réseau respectif (1, ..., 128) devient inactif étant effectuée par l'intermédiaire d'au moins un noeud de surveillance associé au noeud de réseau respectif (1, ..., 128), l'au moins un noeud de surveillance surveillant si le noeud de réseau respectif (1, ..., 128) émet des messages d'activité (A1, A2),
**caractérisé en ce que** l'au moins un noeud de surveillance, dans le cas où le noeud de réseau respectif (1, ..., 128) n"émet plus de messages d'activité (A1, A2), envoie un message de désactivation (F) à tous les autres noeuds de réseau (1, ..., 128), le message de désactivation (F) contenant au moins la valeur d'identité (P_ID) du noeud de réseau respectif (1, ..., 128) et chaque noeud de réseau prêt à fonctionner (1, ..., 128), à la réception d'un message de désactivation (F), mettant sur inactif, dans sa table, un champ de statut (SB) de l'entrée du noeud de réseau conformément à la valeur d'identité (P_ID) dans le message de désactivation (D).

2. Procédé selon la revendication 1, dans lequel le procédé est mis en oeuvre dans un réseau de communication d'un système technique avec une pluralité de composants techniques, à au moins une partie des composants techniques étant affectée respectivement une identité d'appareil (IED_Name) pour accéder au composant technique, et à une identité d'appareil (IED_Name) étant associé au moins un noeud de réseau (1, ..., 128) du réseau de communication, une entrée de la table (T1, T56, T96, T112) des noeuds de réseau respectifs (1, ..., 128) comprenant en outre l'identité d'appareil (IED_Name) à laquelle est associé le noeud de réseau (1, ..., 128) correspondant à l'entrée, tout en étant qu'est en outre transmise, avec un message d'activité respectif (A1, A2), l'identité d'appareil (IED_Name) à laquelle est associé le noeud de réseau (1, ..., 128) qui émet le message d'activité respectif (A1, A2).

3. Procédé selon la revendication 2, dans lequel le système technique comprend un système de distribution de tension, et plus particulièrement un poste de transformation, les composants techniques comprenant en particulier des unités de commutation du système de distribution de tension.

4. Procédé selon la revendication 2 ou 3, dans lequel le système technique comprend un système de production d'énergie, et plus particulièrement une turbine.

5. Procédé selon l'une des revendications 2 à 4, dans lequel le système technique comprend une installation d'automatisation, et plus particulièrement une chaîne de production.

6. Procédé selon l'une des revendications précédentes, dans lequel les messages d'activité (A1, A2) sont envoyés dans le réseau de communication sous la forme de messages broadcast par le noeud de réseau respectif.

7. Procédé selon l'une des revendications précédentes, dans lequel le message de désactivation (F) est envoyé dans le réseau de communication sous la forme d'un message broadcast par l'au moins un noeud de surveillance.

8. Procédé selon l'une des revendications précédentes, dans lequel l'au moins un noeud de surveillance est un noeud de réseau qui est voisin du noeud de réseau surveillé respectif (1, ..., 128) dans l'ordre des valeurs d'identité (P_ID), notamment deux noeuds de réseau voisins (1, ..., 128) étant les noeuds de surveillance d'un noeud de réseau surveillé (1, .., 128).

9. Procédé selon la revendication 8, dans lequel l'au moins un noeud de surveillance, dans le cas où il reçoit un message d'activité d'un noeud de réseau (1, ..., 128) nouvellement activé ou venu dans le réseau de communication, vérifie si le nouveau noeud de réseau (1, ..., 128) est un nouveau noeud de réseau voisin (1, ..., 128), le noeud de surveillance, si le nouveau noeud de réseau (1, ..., 128) est un nouveau noeud de réseau voisin (1, ..., 128), commençant la surveillance de ce noeud de réseau (1, ..., 128).

10. Procédé selon l'une des revendications précédentes, dans lequel un noeud de réseau respectif (1, ..., 128) envoie à tous les autres noeuds de réseau (1, ..., 128) un message de désactivation (F) contenant sa valeur d'identité (P_ID) lorsque le noeud de réseau respectif (1, ..., 128) se déconnecte.

11. Procédé selon l'une des revendications précédentes, dans lequel la table (T1, T56, T96, T112) d'un noeud de réseau respectif (1, ..., 128) contient des entrées pour toutes les valeurs d'identité (P_ID) de la plage de valeurs, tout en étant qu'il est indiqué pour chaque entrée, via un champ de statut (SB), si, dans le réseau de communication, le noeud de réseau (1, ..., 128) de l'entrée est présent ou s'il est prêt à fonctionner ou s'il est inactif.

12. Procédé selon la revendication 11, dans lequel, si des messages d'activité (A1, A2) sont reçus, dans un noeud de réseau respectif (1, ..., 128), d'un noeud de réseau (1, ..., 128) qui, dans le réseau de communication, n'était auparavant pas encore présent ou était auparavant inactif, l'entrée correspondante du noeud de réseau (1, ..., 128) de la table qui n'était auparavant pas encore présent ou était auparavant inactif est synchronisée sur le contenu du message d'activité (A1, A2), le champ de statut (SB) de l'entrée correspondante étant mis sur actif.

13. Procédé selon l'une des revendications précédentes, dans lequel chaque noeud de réseau prêt à fonctionner (1, ..., 128) est compétent pour l'intervalle de valeurs d'identité (P_ID) entre sa valeur d'identité (P_ID) et la valeur d'identité directement supérieure ou directement inférieure de son nceud voisin prêt à fonctionner.

14. Procédé selon la revendication 13 en combinaison avec l'une des revendications 11 à 12, dans lequel, en cas de modification du champ de statut (SB) d'une entrée de la table (T1, T56, T96, T112) des noeuds de réseau prêts à fonctionner (1, ..., 128), les intervalles des valeurs d'identité (P_ID) pour lesquels les noeuds de réseau prêts à fonctionner (1, ..., 128) sont compétents sont adaptés sur la base du nombre qui se modifie de noeuds de réseau prêts à fonctionner (1, ..., 128).

15. Procédé selon l'une des revendications précédentes, dans lequel des ressources sont publiées dans le réseau de communication par au moins une partie des noeuds de réseau (1, ..., 128) par application d'un ou de plusieurs mots clés (K) associés à une ressource sur une valeur d'identité (P_ID), la ressource, ou un renvoi à la ressource, étant stockée sur un noeud de publication qui est le noeud de réseau (1, ..., 128) compétent pour l'intervalle qui contient la valeur d'identité (P_ID) sur laquelle le ou les mots clés (K) sont appliqués.

16. Procédé selon la revendication 15, dans lequel les valeurs d'identité (P_ID) sont des valeurs de hachage, l'application du ou des mots clés (K) sur la valeur d'identité (P_ID) se faisant avec une fonction de hachage.

17. Procédé selon la revendication 16, dans lequel la fonction de hachage est choisie de manière à obtenir une distribution homogène des ressources sur les noeuds de réseau (1, ..., 128).

18. Procédé selon l'une des revendications 15 à 17, une réplication étant réalisée de manière telle, à la publication d'une ressource, que la ressource, ou un renvoi à la ressource, est stockée non seulement sur le noeud de publication, mais aussi sur d'autres noeuds de réseau (1, ..., 128).

19. Procédé selon la revendication 18, dans lequel les autres noeuds de réseau (1, ..., 128) sont déterminés par addition de nombres premiers à la valeur d'identité (P_ID) du noeud de publication.

20. Procédé selon l'une des revendications 15 à 19, dans lequel, en cas de modification de la compétence d'un noeud de réseau (1, ..., 128) pour une ressource dans le réseau de communication, la ressource est de nouveau publiée dans le réseau de communication.

21. Procédé selon l'une des revendications 15 à 20, dans lequel des ressources sont recherchées de manière telle, dans le réseau de communication, qu'un noeud de réseau chercheur (1, ..., 128) applique le ou les mots clés (K) de la ressource sur la valeur d'identité (P_ID) et détermine, à l'aide de sa table (T1, T56, T96, T112), le noeud de réseau qui est compétent pour la ressource, ce noeud de réseau étant contacté via son adresse (IP_ADDR) dans la table.

22. Procédé selon l'une des revendications précédentes, dans lequel le procédé est mis en oeuvre dans un réseau peer to peer, en particulier avec une structure annulaire logique du peer.

23. Réseau de communication décentralisé comportant une pluralité de noeuds de réseau (1, ..., 128), à chaque noeud de réseau (1, ..., 128) étant attribuée une valeur d'identité (P_ID) tirée d'une plage de valeurs d'identité (P_ID) ainsi qu'une adresse (IP_ADDR) aux fins de la communication du noeud de réseau respectif (1, ..., 128) avec d'autres noeuds de réseau (1, ..., 128) et chaque noeud de réseau (1, ..., 128) étant compétent pour un intervalle de valeurs d'identité (P_ID) de la plage de valeurs, le réseau de communication étant aménagé de manière telle qu'en servite :
- chaque noeud de réseau prêt à fonctionner (1, ..., 128) gère une table (T1, T56, T96, T112) qui contient, pour au moins les noeuds de réseau prêts à fonctionner (1, ..., 128) dans le réseau de communication, respectivement une entrée qui comprend la valeur d'identité (P_ID) et l'adresse (IP_ADDR) de chaque noeud de réseau (1, ...., 128) ;
- chaque noeud de réseau prêt à fonctionner (1, ..., 128) envoie régulièrement des messages d'activité (A1, A2) aux autres noeuds de réseau du réseau de communication, les messages d'activité (A1, A2) contenant respectivement au moins la valeur d'identité (P_ID) et l'adresse (IP_ADDR) de chaque noeud de réseau (1, ..., 128) et chaque noeud de réseau prêt à fonctionner (1, ..., 128) synchronisant, à la réception d'un message d'activité (A1, A2), sa table (T1, T56, T96, T112) sur le contenu du message d'activité (A1, A2) ;
- il est constaté, dans le réseau de communication, si un noeud de réseau prêt à fonctionner (1, ..., 128) devient inactif, un noeud de réseau inactif (1, ..., 128) n'émettant plus de messages d'activité (A1, A2), la constatation qu'un noeud de réseau respectif (1, ..., 128) devient inactif étant effectuée par l'intermédiaire d'au moins un noeud de surveillance associé au noeud de réseau respectif (1, ..., 128), l'au moins un noeud de surveillance surveillant si le noeud de réseau respectif (1, ..., 128) émet des messages d'activité (A1, A2),
**caractérisé en ce que** l'au moins un noeud de surveillance, dans le cas où le noeud de réseau respectif (1, ..., 128) n'émet plus de messages d'activité (A1, A2), envoie un message de désactivation (F) à tous les autres noeuds de réseau (1, ..., 128), le message de désactivation (F) contenant au moins la valeur d'identité (P_ID) du noeud de réseau respectif (1, ..., 128) et chaque noeud de réseau prêt à fonctionner (1, ..., 128), à la réception d'un message de désactivation (F), mettant sur inactif, dans sa table, un champ de statut (SB) de l'entrée du noeud de réseau conformément à la valeur d'identité (P_ID) dans le message de désactivation (D).

24. Réseau de communication selon la revendication 23, dans lequel le réseau de communication est aménagé de manière telle qu'un procédé selon l'une des revendications 2 à 22 peut être exécuté.
